# EUROPEAN PATENT APPLICATION

(11) **EP 4 647 538 A1**
(43) Date of publication of application: **12.11.2025**
(21) Application number: 24174410.1
(22) Date of filing: 06.05.2024
(51) Int. Cl.: C25D 7/04, C25D 5/02, F16L 58/08, A62C 35/58

(54) **PROCESSING METHOD FOR PREVENTING MICROBIOLOGICALLY INFLUENCED CORROSION OF STEEL FIRE SPRINKLER PIPES**

(71) Applicant: Lin, Chia-Hsien, 612 Tiabo City, Chiayi County (TW)
(72) Inventor: Lin, Chia-Hsien, 612 Tiabo City, Chiayi County (TW)
(74) Representative: Heisel, Wolfgang

(57) **Abstract**

A processing method for preventing microbiologically influenced corrosion of steel fire sprinkler pipes, includes clearly acid washing (10) a steel pipe, applying antirust oil (20) on the interior of the steel pipe, sealing and soldering (30) two ends of the steel pipe to form two soldered and sealed portions on the steel pipe, galvanizing (40) the steel pipe to form a zinc coating layer on the outer surface of the steel pipe, and cutting (50) the two soldered and sealed portions of the steel pipe.

## Description

The present invention relates to a processing method for preventing microbiologically influenced corrosion (MIC) of steel fire sprinkler pipes.

It is very difficult to manage the problem of corrosion of steel fire sprinkler pipes caused by microorganisms, that is, microbiologically influenced corrosion (MIC). The formation of MIC deposits can easily cause blockage of the steel fire sprinkler pipes, so that the steel fire sprinkler pipes fail to function properly when a fire occurs. In addition, the steel fire sprinkler pipes easily leak due to holes caused by corrosion.

It is found that the MIC is mainly caused by debris (including iron rust) and oxygen inside the steel fire sprinkler pipes. Thus, when the debris or the oxygen inside the steel fire sprinkler pipes is cleared, the microorganisms cannot grow, thereby preventing occurrence of MIC. After the steel fire sprinkler pipes are filled with water, a small amount of air is trapped inside the steel fire sprinkler pipes, so that aerobic bacteria will use the oxygen in the trapped air and adhere/grow on the debris (including iron rust) to form a biofilm. After a period of time (about a month), the biofilm can accommodate anaerobic bacteria, like Sulfate-Reducing Bacteria (SRB), that can grow without oxygen and will continue to attack the inner wall of the steel fire sprinkler pipes, resulting in corrosion.

A conventional method for preventing the MIC includes filling nitrogen into the steel fire sprinkler pipes before filling water, the concentration of nitrogen inside the steel pipe can reach up to 98%, with the remaining 2% being oxygen, and then filling water into the steel fire sprinkler pipes. However, 2% oxygen still remains in the trapped air of the steel fire sprinkler pipes, so that such a method cannot eliminate the oxygen completely. Thus, the 2% oxygen will cause occurrence of MIC, thereby corroding the steel fire sprinkler pipes.

In accordance with the present invention, there is provided a processing method for preventing microbiologically influenced corrosion of steel fire sprinkler pipes, comprising (a) acid washing treatment, (b) applying anti-rust oil treatment, (c) sealing and soldering treatment, (d) galvanizing treatment, and (e) cutting treatment. The acid washing treatment includes putting a steel pipe into an acid washing tank, immersing the steel pipe in an acid washing liquid completely to perform an acid washing procedure, removing the steel pipe from the acid washing tank after the acid washing procedure is finished, fully cleaning the steel pipe by water washing to clear the acid washing liquid and debris, placing the steel pipe in a well-ventilated place, and letting the steel pipe dry naturally. The applying anti-rust oil treatment includes applying anti-rust oil on the interior of the steel pipe after drying, to prevent the steel pipe from being rusted. Preferably, the anti-rust oil is selected from a petrochemical rust preventive oil. The sealing and soldering treatment includes sealing and soldering two round steel sheets in two ends of the steel pipe respectively to form two soldered and sealed portions on the two ends of the steel pipe respectively. Preferably, each of the two round steel sheets has a size equal to that of each of the two ends of the steel pipe. The galvanizing treatment includes performing an electro-plating process to galvanize the outer surface of the steel pipe to form a coating layer on the outer surface of the steel pipe, removing the steel pipe from an electroplating solution, and washing the steel pipe properly to clear the electroplating solution remaining on the steel pipe. The cutting treatment includes cutting the two soldered and sealed portions on the two ends of the steel pipe.

According to the primary advantages of the present invention, an acid washing procedure is initially performed to clear debris inside the steel pipe. Then, a zinc coating layer is electroplated on the outer surface of the steel pipe. Once the steel pipe is filled with water, the zinc coating serve as a cathodic protection to prevent the inner wall of the steel pipe from being rusted. In this way, it can completely clear and prevent the debris inside the steel pipe, thereby preventing the occurrence of microbiologically influenced corrosion (MIC).

Further benefits and advantages of the present invention will become apparent after a careful reading of the detailed description with appropriate reference to the accompanying drawings.

In the drawings:

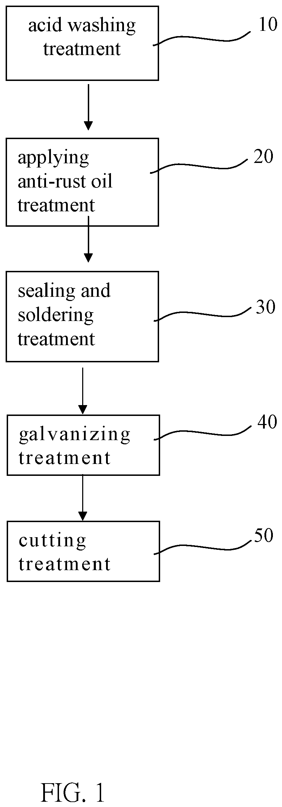

**FIG. 1** is a flow chart of a processing method for preventing microbiologically influenced corrosion of steel fire sprinkler pipes in accordance with the preferred embodiment of the present invention.

Referring to FIG. 1, a processing method for preventing microbiologically influenced corrosion of steel fire sprinkler pipes in accordance with the preferred embodiment of the present invention comprises (a) acid washing (or pickling or cleaning or dipping) treatment 10, (b) applying anti-rust (or anti-corrosive) oil treatment 20, (c) sealing and soldering (or welding or brazing) treatment 30, (d) galvanizing treatment 40, and (e) cutting treatment 50.

The acid washing treatment 10 includes putting a steel pipe into an acid washing tank, immersing the steel pipe in an acid washing liquid completely to perform an acid washing procedure, removing the steel pipe from the acid washing tank after the acid washing procedure is finished, fully cleaning the steel pipe by water washing to clear the acid washing liquid and debris, placing the steel pipe in a well-ventilated place, and letting the steel pipe dry naturally.

In the acid washing treatment 10, the acid washing liquid is selected from sulfuric acid (H2SO4) or hydrochloric acid (or chlorhydric acid) (HCl), and the acid washing procedure is worked during a time between 15 minutes and 20 minutes under a temperature between five and fifty degrees Celsius (5-50°C).

The applying anti-rust oil treatment 20 includes applying anti-rust oil on the interior of the steel pipe after drying, to prevent the steel pipe from being rusted. Preferably, the anti-rust oil is selected from a petrochemical rust preventive oil.

The sealing and soldering treatment 30 includes sealing and soldering two round steel sheets in two ends of the steel pipe respectively to form two soldered and sealed portions on the two ends of the steel pipe respectively. Preferably, each of the two round steel sheets has a size equal to that of each of the two ends of the steel pipe.

The galvanizing treatment 40 includes performing an electro-plating process to galvanize the outer surface of the steel pipe to form a galvanized (or zinc) coating layer on the outer surface of the steel pipe, removing the steel pipe from an electroplating solution, and washing the steel pipe properly to clear the electroplating solution remaining on the steel pipe. In such a manner, the two ends of the steel pipe are soldered and sealed, so that the electroplating solution will not enter the inside of the steel pipe.

In the galvanizing treatment 40, the electroplating solution includes potassium chloride, ammonium chloride, gloss agent, and softener, and the electro-plating process is worked under a temperature between five and fifty degrees Celsius (5-50°C).

The cutting treatment 50 includes cutting the two soldered and sealed portions on the two ends of the steel pipe.

According to the processing method for preventing microbiologically influenced corrosion of steel fire sprinkler pipes of the present invention, the inner wall of the steel pipe is cleaned by acid washing to clear the debris (including iron rust), and is applied with the anti-rust oil, while the outer surface of the steel pipe is coated with a galvanized coating layer. Thus, the debris (including iron rust) inside the steel pipe is cleared, so that one of the primary conditions for the adhesion and growth of microorganisms has been eliminated. In addition, the zinc coating layer is electroplated on the outer surface of the steel pipe, to prevent oxygen in the air inside the steel pipe from passing through the oil layer to oxidize iron of the inner wall of the steel pipe. That is because the zinc outside the steel pipe is served as a cathodic protection after the steel pipe is filled with water and will immediately reduce the rusted iron inside the steel pipe to iron, so that the inner wall of the steel pipe will not rust. When the inner wall of the steel pipe does not rust, the inner wall of the steel pipe is kept clean to block adhesion and growth of the microorganisms, thereby preventing the occurrence of microbiologically influenced corrosion (MIC).

In practice, when the steel pipe processed by the method of the present invention is used in a pipeline of a fire protection system, the inner wall of the steel pipe is cleaned by acid washing to clear the debris (including iron rust) therein. Even when the pipeline is filled with water, little air still remains in the pipeline. Thus, oxygen in the trapped air will oxidize iron of the inner wall of the steel pipe. At this time, the zinc coating layer is electroplated on the outer surface of the steel pipe to serve as a cathodic protection after the steel pipe is filled with water and will immediately reduce the rusted iron inside the steel pipe to iron, so that the inner wall of the steel pipe will not rust even when oxygen exists inside the steel pipe. Thus, the inner wall of the steel pipe does not rust to prevent the occurrence of microbiologically influenced corrosion (MIC), so as to enhance the lifetime of the steel fire sprinkler pipe.

Accordingly, an acid washing procedure is initially performed to clear debris inside the steel pipe. Then, a zinc coating layer is electroplated on the outer surface of the steel pipe. Once the steel pipe is filled with water, the zinc coating serves as a cathodic protection to prevent the inner wall of the steel pipe from being rusted. In this way, it can completely clear and prevent the debris inside the steel pipe, thereby preventing the occurrence of microbiologically influenced corrosion (MIC).

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the scope of the invention.

## Claims

1. A processing method for preventing microbiologically influenced corrosion of steel fire sprinkler pipes, **comprising:**
(a) acid washing treatment (10) including putting a steel pipe into an acid washing tank, immersing the steel pipe in an acid washing liquid completely to perform an acid washing procedure, removing the steel pipe from the acid washing tank after the acid washing procedure is finished, fully cleaning the steel pipe by water washing to clear the acid washing liquid and debris, placing the steel pipe in a well-ventilated place, and letting the steel pipe dry naturally;
(b) applying anti-rust oil treatment (20) including applying anti-rust oil on the interior of the steel pipe after drying, to prevent the steel pipe from being rusted;
the anti-rust oil being selected from a petrochemical rust preventive oil;
(c) sealing and soldering treatment (30) including sealing and soldering two round steel sheets in two ends of the steel pipe respectively to form two soldered and sealed portions on the two ends of the steel pipe respectively; each of the two round steel sheets having a size equal to that of each of the two ends of the steel pipe;
(d) galvanizing treatment (40) including performing electro-plating process to galvanize the outer surface of the steel pipe to form a coating layer on the outer surface of the steel pipe, removing the steel pipe from an electroplating solution, and washing the steel pipe properly to clear the electroplating solution remaining on the steel pipe; and
(e) cutting treatment (50) including cutting the two soldered and sealed portions on the two ends of the steel pipe.

2. The processing method as claimed in claim 1, **wherein** in the acid washing treatment, the acid washing liquid is selected from sulfuric acid (H2SO4) or hydrochloric acid (HCl), and the acid washing procedure is worked during a time between 15 minutes and 20 minutes under a temperature between five and fifty degrees Celsius (5-50°C).

3. The processing method as claimed in claim 1, **wherein** in the galvanizing treatment, the electroplating solution includes potassium chloride, ammonium chloride, gloss agent, and softener, and the electro-plating process is worked under a temperature between five and fifty degrees Celsius (5-50°C).
